(19) Europäisches Patentamt
European Patent Office
Office européen des brevets

(11) Publication number: **0 311 078 A1**

(12) **EUROPEAN PATENT APPLICATION**

(21) Application number: **88116574.0**

(51) Int. Cl.4: **C08G 73/12**

(22) Date of filing: **06.10.88**

(30) Priority: **06.10.87 JP 252076/87**

(43) Date of publication of application: **12.04.89 Bulletin 89/15**

(84) Designated Contracting States: **DE FR GB NL**

(71) Applicant: **MITSUBISHI PETROCHEMICAL CO., LTD.**
**5-2, 2-chome, Marunouchi**
**Chiyoda-ku Tokyo 100(JP)**

(72) Inventor: **Kanayama, Kaoru**
**Mitsubishi Petrochem. Co.Ltd. 3-1, Chuo 8-chome**
**Ami-machi Inashiki-gun Ibaraki(JP)**
Inventor: **Ohnuma, Yoshinobu**
**Mitsubishi Petrochem. Co., Ltd. 3-1, Chuo 8-chome**
**Ami-machi Inashiki-gun Ibaraki(JP)**

(74) Representative: **Hansen, Bernd, Dr.rer.nat. et al**
**Hoffmann, Eitle & Partner Patentanwälte**
**Arabellastrasse 4**
**D-8000 München 81(DE)**

# (54) Heat resistant resin composition.

(57) A heat resistant resin composition is disclosed, comprising 100 parts by weight of (A) polymaleimide containing from 5 to 90% by weight, based on the total amount of the component (A), of a polymaleimide compound represented by formula (I):

EP 0 311 078 A1

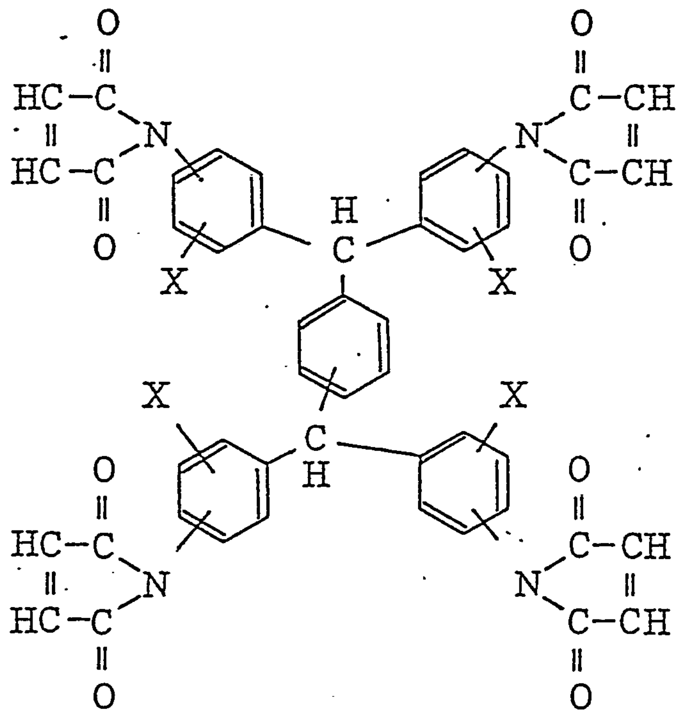

(I)

and from 5 to 100 parts by weight of (B) an amine compound represented by formula (II):

$Q\text{-}(NH_2)_n$ (II)

wherein Q represents an organic group having from 2 to 150 carbon atoms and n represents an integer of 1 or more.

The composition provides a cured product having improved mechanical properties at high temperatures and improved heat stability.

# HEAT RESISTANT RESIN COMPOSITION

## FIELD OF THE INVENTION

This invention relates to a heat resistant resin composition excellent in heat stability, which is useful as multi-layer laminate resin material for sliding parts, material for sealants, molding material and powder coating.

## BACKGROUND OF THE INVENTION

In the fields of electric or electronic equipments and transport equipments, e.g., those of airplanes and vehicles, demands for materials having further improved heat resistance have been increasing with the recent developments of equipments with high performances or reduced size and weight.

In these fields, epoxy resins, maleimide resins and polyimide resins have chiefly been employed. Although epoxy resins are excellent in mechanical and electrical characteristics, they do not always exhibit sufficient heat resistance. Polyimide resins, though excellent in heat resistance, encounter difficulty in molding due to their insolubility and infusibility.

For the purpose of improving moldability of polyimide, a bismaleimide resin of addition type has been proposed. However, a cured resin obtained by mere thermal polymerization of the bismaleimide resin of addition type is very brittle and easily causes cracks on receiving thermal shocks, such as cooling and heating, failing to withstand practical use.

In order to eliminate the above-stated disadvantage of bismaleimide while retaining its superior heat resistance, a polyaminobismaleimide resin that is a prepolymer of N,N′-4,4′-diphenylmethanebismaleimide and 4,4′-diaminodiphenylmethane has been developed and put into practical use as a resin sufficiently withstanding practical use. However, making full use of the characteristics of this polyaminobismaleimide resin requires heating at high temperature for long periods of time, thus proving bad economy. Besides, a cured product of the polyaminobismaleimide resin exhibits considerably reduced mechanical properties at high temperatures and also inferior heat stability as compared with the cured product obtained by thermal polymerization of the above-described bismaleimide of addition type alone.

## SUMMARY OF THE INVENTION

One object of this invention is to provide a heat resistant resin composition comprising a polyaminobismaleimide resin having improved mechanical properties at high temperatures and improved heat stability.

This invention relates to a heat resistant resin composition comprising 100 parts by weight of (A) polymaleimide having at least two maleimide groups in the molecule thereof containing from 5 to 90% by weight, based on the total amount of the component (A), of a polymaleimide compound represented by formula (I):

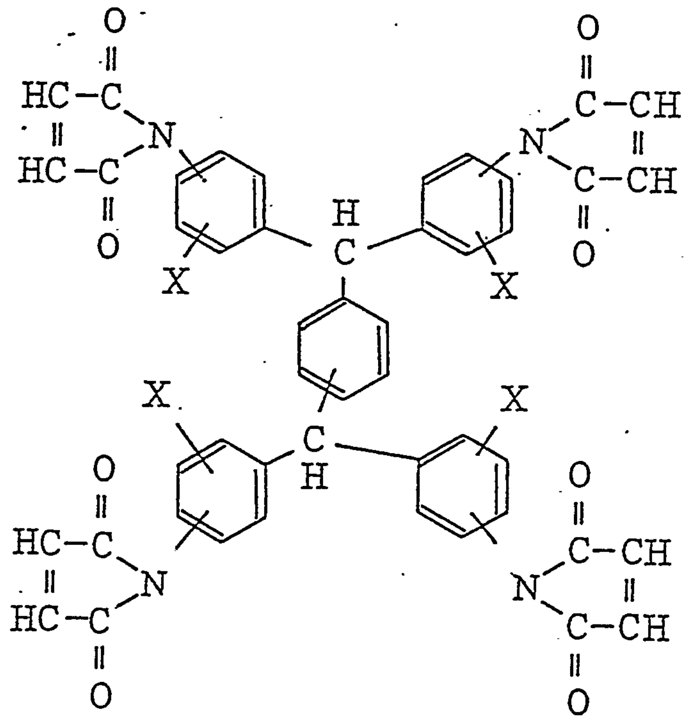

(I)

wherein X represents a hydrogen atom, a halogen atom or an alkyl or alkoxy group having from 1 to 4 carbon atoms, and from 5 to 100 parts by weight of (B) an amine compound represented by formula (II):

$Q\text{-}(NH_2)_n$ (II)

wherein Q represents an organic group having from 2 to 150 carbon atoms, preferably from 6 to 80 carbon atoms and containing at least one of hydrogen, oxygen, sulfur, halogen, nitrogen, phosphorus, and silicon atoms; and n represents an integer of 1 or more, preferably 1 to 10.

## DETAILED DESCRIPTION OF THE INVENTION

The polymaleimide compound represented by formula (I) which is used in the component (A) can be prepared according to the process disclosed in JP-A-59-12931 (the term "JP-A" as used herein means an "unexamined published Japanese patent application"). That is, the polymaleimide compound-of formula (I) can be synthesized by reacting 1 mol of an aromatic dialdehyde with 2 to 60 mols, preferably 4 to 32 mols, of an aromatic amine represented by formula (III):

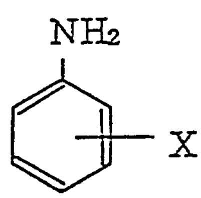

(III)

wherein X represents a hydrogen atom, a halogen atom or an alkyl or alkoxy group having from 1 to 4 carbon atoms, to obtain a polyamine, addition reacting the polyamine with maleic anhydride to obtain a polyamide acid, and subjecting the polyamide acid to dehydrating cyclization.

The polymaleimide as the component (A) contains, in addition to the polymaleimide compound of formula (I), polymaleimide compounds having at least two, preferably 2 to 30, maleimide groups in the molecule thereof. Specific examples of such polymaleimide compounds are (i) bismaleimides, e.g., N,N′-ethylenebismaleimide, N,N′-hexamethylenebismaleimide, N,N′-m-phenylenebismaleimide, N,N′-p-phenylenebismaleimide, N,N′-4,4′-diphenylmethanebismaleimide, N,N′-4,4′-diphenyletherbismaleimide, N,N′-methylenebis(3-chloro-p-phenylene)bismaleimide, N,N′-4,4′-diphenylsulfonebismaleimide, N,N′-4,4′-dicyclohexylmethanebismalemide, N,N′-α,α′-4,4′-dimethylenecyclohexanebismaleimide, N,N′-m-xylylenebismaleimide, N,N′-4,4′-diphenylcyclohexanebismaleimide, N,N′-4,4′-diphenyl1,1-propanebismaleimide, N,N′-4,4′-triphenyl-1,1,1-ethanebismaleimide, N,N′-4,4′-triphenylmethanebismaleimide, N,N′-3,5-triazole-1,2,4-bismaleimide, etc.; and (ii) poly(N-phenylmethylene)maleimide represented by formula (IV):

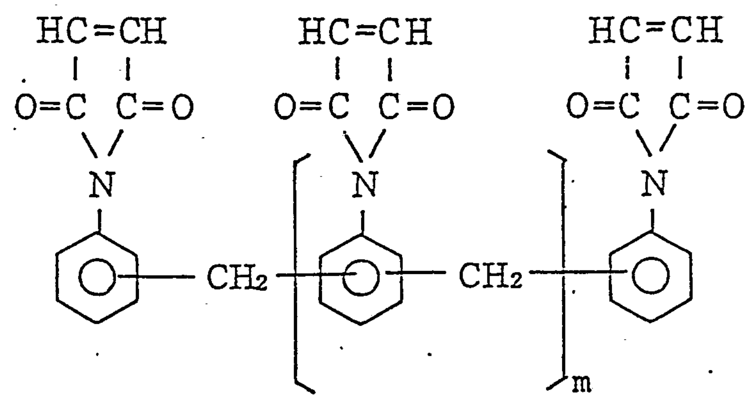

(IV)

wherein m represents a number of from 0.1 to 10.

If the content of the polymaleimide compound represented by formula (I) in the component (A) is less than 5% by weight, the resulting cured resin is inferior in heat resistance. If it exceeds 90% by weight, the cured resin has deteriorated impact resistance.

Specific examples of the amine compound as the component (B) are aniline, toluidine, aminophenol, aminobenzoic acid, triethylenetetramine, tetraethylenepentamine, m-phenylenediamine, p-phenylenediamine, 4,4′-diaminodicyclohexylmethane, 1,4′-diaminocyclohexane, 2,6-diaminopyridine, 4,4′-diainodiphenylmethane, 4,4′-diaminodiphenyl sulfone, 4,4′-diaminodiphenyl ether, 4,4′-diaminodiphenyl sulfide, 3,3′-diaminodiphenyl sulfone, 2,2-bis(4-aminophenyl)propane, bis(4-aminophenyl)diphenylsilane, bis(4-aminophenyl)methylphosphine oxide, bis(3-aminopenyl)methylphosphine oxide, bis(4-aminophenyl)-phenylphosphine oxide, bis(4-aminophenyl) phenylamine, 1,5-diaminonaphthalene, 2,4-diaminotoluene, 2,6-diaminotoluene, 3,3′-dimethyl-4,4′-diaminodiphenylmethane, 2,2′-dimethyl-4,4′-diaminodiphenylmethane, 3,3′,5,5′-tetraethyl-4,4′-diaminodiphenylmethane, 3,3′-diethyl-4,4′-diaminodiphenylmethane, 3,3′,5,5′-tetraethyl4,4′-diaminodiphenylmethane, bis(3-chloro-4-aminophenyl)methane, trimethylenediamine, tetramethylene diamine, hexamethylenediamine, 4,7-dioxadecane-1,10-diamine, m-xylylenediamine, p-xylylenediamine, etc.

The component (B) is used in an amount of from 5 to 100 parts by weight, preferably from 10 to 50 parts by weight, per 100 parts by weight of the component (A).

If desired, the heat resistant resin composition in accordance with the present invention can contain various additives, such as powderous or fibrous reinforcements or fillers, colorants, pigments, and flame-retardants. Implicit in the powderous reinforcements or fillers are metal oxides (e.g., aluminum oxide, magnesium oxide), metal hydroxides (e.g., aluminum hydroxide), metal carbonates (e.g., calcium carbonate, magnesium carbonate), diatomaceous earth, basic magnesium silicate, calcined clay, silica fine powder, fused silica, crystalline silica, carbon black, kaolin, mica fine powder, quartz powder, graphite, asbestos, molybdenum disulfide, antimony trioxide, etc. Included in the fibrous reinforcements or fillers are inorganic fibers (e.g., glass fiber, rock wool, ceramic fiber, asbestos, carbon fiber) , paper, pulp, wood meal, linter, and synthetic fibers (e.g., polyamide fiber). The amount of these powderous or fibrous reinforcements or fillers to be added varies depending on use. For example, for use as laminate resins or molding materials, they are usually added in an amount up to 500 parts by weight per 100 parts by weight of the resin composition.

Specific examples of the colorants, pigments or flame-retardants include titanium dioxide, chrome yellow, carbon black, iron black, moblydenum red, Prussian blue, ultramarine blue, cadmium yellow, cadmium red, inorganic phosphorus (e.g., red phosphorus), and organic phosphorus (e.g., triphenyl phosphite).

The resin composition may further contain various synthetic resins for the purpose of improving characteristics of the resin required in the final use, e.g., as coating films, adhesive layers, resin molded

articles, etc. Such synthetic resins include phenolic resins, alkyd resins, melamine resins, fluoroplastics, vinyl chloride resins, acrylic resins, silicone resins, polyester resins, and mixtures of two or more thereof. These synthetic resins should be preferably compounded in such an amount that does not impair properties inherently possessed by the resin composition, i.e., in an amount of less than 50% by weight based on the total resin content.

The resin composition of the present invention can be prepared by mixing the above-described components (A), (B) and, if desired, additives under heating or kneading them by means of a roll, a kneader, etc. either in a wet process in the presence of an appropriate organic solvent or in a dry process.

The heat resistant resin composition in accordance with the present invention provides a cured product having superior heat resistance as compared with the conventional polyaminobismaleimide resins.

The present invention is now illustrated in greater detail with reference to the following Examples, but it should be understood that the present invention is not deemed to be limited thereto. In these examples, all the parts are by weight unless otherwise indicated. In the examples, polymaleimide obtained from 1,3-benzenedialdehyde (1 mol), aniline (8 mols), and maleic anhydride (2.1 mols) [hereinafter referred to as Polymaleimide A (maleimide equivalent: 200 g/eq., melting point: 175 to 185 °C)] or polymaleimide obtained from 1,4-benzenedialdehyde (1 mol), aniline (4 mols), o-toluidine (4 mols), and maleic anhydride (2.1 mols) [hereinafter referred to as Polymaleimide B (maleimide equivalent: 230 g/eq., melting point: 180 to 190 °C)] was used as the polymaleimide compound represented by formula (I).

## EXAMPLE 1

Fifty parts of N,N′-4,4′-diphenylmethanebismaleimide, 50 parts of Polymaleimide A and 18 parts of 3,3′-dimethyl-4,4′-diaminodiphenylmethane were kneaded at a temperature from 130 to 150 °C for 10 minutes by means of a heated roll to obtain a prepolymer.

In 100 parts of N-methyl-2-pyrrolidone was dissolved 100 parts of the resulting prepolymer to prepare a varnish.

The resulting varnish was impregnated into 0.16 mm thick glass cloth having been subjected to aminosilane treatment, followed by drying at 140 °C for 20 minutes to prepare a prepreg.

Nine sheets of the prepreg were laid up and pressed at 180 °C at a pressure of 60 $kg/cm^2$ for 60 minutes to form a 1.6 mm thick laminated board, which was then postcured at 250 °C for 5 hours. Various physical properties of the resulting cured product are shown in Table 1 below.

## EXAMPLES 2 TO 4

A laminated board (cured) was obtained in the same manner as in Example 1, except for using the components shown in Table 1. Physical properties of the cured product are shown in Table 1.

## COMPARATIVE EXAMPLE 1

In 100 parts of N-methyl-2-pyrrolidone was dissolved 100 parts of polyaminobismaleimide ("Kerimid 601" produced by RHÔNE-POULENC to prepare a varnish. The varnish was impregnated into 0.16 mm thick glass cloth having been subjected to aminosilane treatment, followed by drying at 140 °C for 20 minutes to obtain a prepreg.

Nine sheets of the prepreg were inserted in a press heated at 150 °C and maintained under a contact pressure for 2 minutes and then press-molded at a press temperature of 180 °C under a pressure of 60 $kg/cm^2$ for 60 minutes to obtain a 1.6 mm thick laminated board. The laminate was then postcured at 250 °C for 5 hours. Physical properties of the resulting laminate are shown in Table 1.

TABLE 1

| Example No. | Polymaleimide: DPMBM* (parts) | Polymaleimide: Polymaleimide (I) (parts) | Amine Compound (II) (parts) | Tg** (°C) | Retention of Flexural Strength After Heat Deterioration***: 1000 Hrs (%) | 3000 Hrs (%) | 5000 Hrs (%) |
|---|---|---|---|---|---|---|---|
| 1 | (50) | A (50) | 3,3'-dimethyl-4,4'-diaminodiphenylmethane (18) | 412 | 100 | 97 | 90 |
| 2 | (50) | B (50) | " | 406 | 100 | 100 | 96 |
| 3 | (70) | A (30) | 4,4'-diaminodiphenylmethane (21) | 395 | 100 | 93 | 87 |
| 4 | (70) | B (30) | " | 390 | 100 | 98 | 92 |
| Comparative Example 1 | Kerimid 601 (100) | | - | 330 | 92 | 85 | 60 |

Note:

* : N,N'-4,4'-Diphenylmethanebismaleimide

** : DMA 10 °C/min (produced by E.I. Du Pont)

*** : At 220 °C in air for the prescribed period of time

While the invention has been described in detail and with reference to specific embodiments thereof, it will be apparent to one skilled in the art that various changes and modifications can be made therein without departing from the spirit and scope thereof.

## Claims

1. A heat resistant resin composition comprising 100 parts by weight of (A) polymaleimide having at least two maleimide groups in the molecule thereof containing from 5 to 90% by weight, based on the total amount of the component (A), of a polymaleimide compound represented by formula (I):

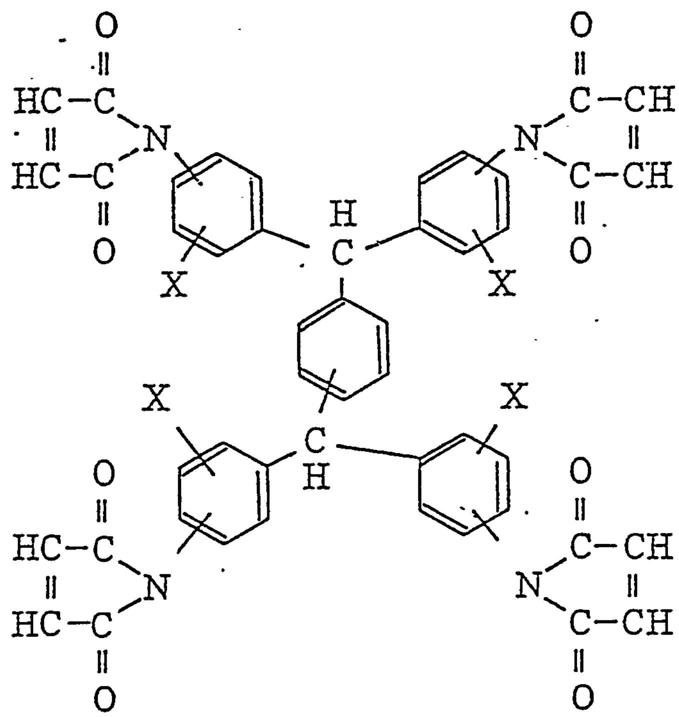

(I)

wherein X represents a hydrogen atom, a halogen atom or an alkyl or alkoxy group having from 1 to 4 carbon atoms, and from 5 to 100 parts by weight of (B) an amine compound represented by formula (II):

$Q\text{-}(NH_2)_n$ (II)

wherein Q represents an organic group having from 2 to 150 carbon atoms and containing at least. one of hydrogen, oxygen, sulfur, halogen, nitrogen, phosphorus, and silicon atoms; and n represents an integer of 1 or more.

2. The heat resistant resin composition as claimed in claim 1, wherein the polymaleimide as the component (A) other than the polymaleimide compound represented by formula (I) is selected from the group consisting of bismaleimides and poly(N-phenylmethylene)maleimide represented by formula (IV):

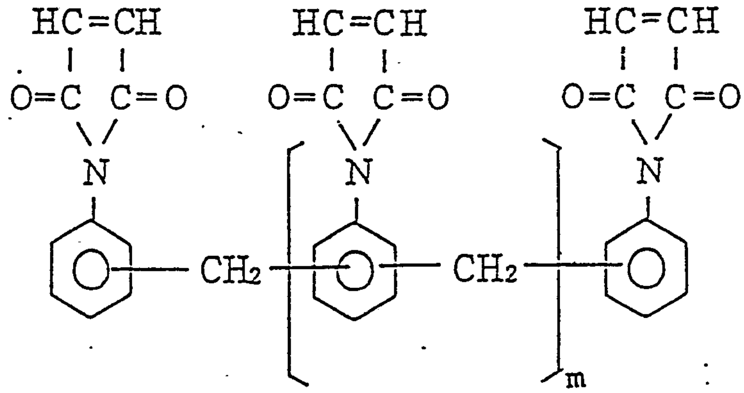

(IV)

wherein m represents a number of from 0.1 to 10.

3. The heat resistant resin composition as claimed in claim 1, wherein said amine compound as the component (B) is selected from the group consisting of aniline, toluidine, aminophenol, aminobenzoic acid, triethylenetetramine, tetraethylenepentamine, m- phenylenediamine, p-phenylenediamine, 4,4'-diaminodicyclohexylmethane, 1,4'-diaminocyclohexane, 2,6-diaminopyridine, 4,4'-diainodiphenylmethane, 4,4'-diaminodiphenyl sulfone, 4,4'-diaminodiphenyl ether, 4,4'-diaminodiphenyl sulfide, 3,3'-diaminodiphenyl sulfone, 2,2-bis(4-aminophenyl)propane, bis(4-aminophenyl)diphenylsilane, bis(4-aminophenyl)-methylphosphine oxide, bis(3-aminopenyl)methylphosphine oxide, bis(4-aminophenyl)phenylphosphine oxide, bis(4-aminophenyl) phenylamine, 1,5-diaminonaphthalene, 2,4-diaminotoluene, 2,6-diaminotoluene, 3,3'-dimethyl-4,4'-diaminodiphenylmethane, 2,2'-dimethyl-4,4'-diaminodiphenylmethane, 3,3',5,5'-tetraethyl-4,4'-diaminodiphenylmethane, 3,3'-diethyl-4,4'-diaminodiphenylmethane, 3,3',5,5'-tetraethyl4,4'-diaminodiphenylmethane, bis(3-chloro-4-aminophenyl)methane, trimethylenediamine, tetramethylenediamine, hexamethylenediamine, 4,7-dioxadecane-1,10-diamine, m-xylylenediamine and p-xylylenediamine.

4. The heat resistant resin composition as claimed in claim 1, wherein the component (B) is used in an amount of from 10 to 50 parts by weight per 100 parts by weight of the component (A).

European Patent Office

# EUROPEAN SEARCH REPORT

Application Number

EP 88 11 6574

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 10, no. 245 (C-368)[2301], 22nd August 1986; & JP-A-61 76 527 (MITSUBISHI PETROCHEM CO., LTD) 19-04-1986<br>* Abstract *<br>----- | 1-4 | C 08 G 73/12 |

TECHNICAL FIELDS SEARCHED (Int. Cl.4)

C 08 G

The present search report has been drawn up for all claims

| Place of search | Date of completion of the search | Examiner |
|---|---|---|
| THE HAGUE | 30-01-1989 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document